# EUROPEAN PATENT APPLICATION

(11) **EP 1 850 094 A2**
(43) Date of publication of application: **31.10.2007**
(21) Application number: 07008315.9
(22) Date of filing: 24.04.2007
(51) Int. Cl.: G01D 11/24

(54) **Rotation sensor**

(30) Priority: 26.04.2006 JP 2006122038
(71) Applicant: ALPS ELECTRIC CO., LTD., Tokyo 145-8501 (JP)
(72) Inventor: Okumura, Hirofumi, Tokyo 145-8501 (JP); Hirosawa, Nobuyuki, Tokyo 145-8501 (JP)
(74) Representative: Klunker . Schmitt-Nilson . Hirsch

(57) **Abstract**

A rotation sensor includes a rotating body (2) that rotates together with a rotating shaft, an angle detector (3) that detects a rotation angle of the rotating body (2), and a casing (1) that accommodates the rotating body (2) and the angle detector (3). The casing (1) includes a lower casing member (10) having an open top and a tab portion (14) provided at the periphery of the lower casing member (10) and a cover member (11) that covers the top of the lower casing member (10). The tab portion (14) of the lower casing member (10) has a through hole (15) through which a metal collar (4) extends, the metal collar (4) having a shape that substantially matches the inner periphery of the through hole (15). The cover member (11) is made of metal and covers the top of the lower casing member (10) over a region including a top surface of the metal collar (4) that extends through the through hole (15).

## Description

### BACKGROUND OF THE INVENTION

### 1. Field of the Invention

The present invention relates to rotation sensors for detecting rotation angles of rotating shafts, and more particularly, to a rotation sensor having a rotating body, an angle detector, and a casing for accommodating the rotating body and the angle detector.

### 2. Description of the Related Art

Rotation sensors for detecting rotation angles of rotating shafts are known. In general, such a rotation sensor is used in, for example, a steering device for an automobile and includes a rotating body that is fixed to a rotating shaft to rotate together therewith and an angle detector for detecting the rotation of the rotating body. Japanese Unexamined Patent Application Publication No. 2001-165698 describes an example of such a rotation sensor.

In the rotation sensor, the rotating body and the angle detector are accommodated in a resin casing. The casing includes an upper member and a lower member that are integrated with each other by joining end faces thereof. The casing has tab portions on the periphery thereof, the tab portions having through holes used for fixing the rotation sensor by means of screws. A metal collar that provides rigid screw fixation is fitted to each of the through holes.

The rotating body rotates together with the rotating shaft, and the rotation of the rotating body is transmitted to the angle detector through a gear engagement portion or the like. At this time, friction may occur between the rotating body and the casing, and static electricity may be generated at a drive unit of the gear engagement portion. In such a case, undesirable influences are caused in the angle detector and a malfunction may occur. In addition, the casing is formed of upper and lower resin members, and two molds are necessary for forming the respective resin members. Therefore, not only the cost of the casing itself but also the cost of the molds are relatively high.

### SUMMARY OF THE INVENTION

In light of the above-described problems, an object of the present invention is to provide a rotation sensor that has a casing of reduced cost and that can detect rotation without being influenced by static electricity generated due to the rotation.

A rotation sensor according to one aspect of the present invention includes a rotating body that rotates together with a rotating shaft, an angle detector that detects a rotation angle of the rotating body, and a casing that accommodates the rotating body and the angle detector. The casing includes a lower casing member having an open top and a tab portion provided at the periphery of the lower casing member and a cover member that covers the top of the lower casing member. The tab portion of the lower casing member has a through hole through which a metal collar extends, the metal collar having a shape that substantially matches the inner periphery of the through hole. The cover member is made of metal and covers the top of the lower casing member over a region including a top surface of the metal collar that extends through the through hole.

Accordingly, the top surface of the casing can be formed of a simple metal component and the cost can be reduced. In addition, since the metal collar having a simple structure can be interposed between the lower casing member and the cover member and be fixed by a screw, the metal collar can be easily attached.

In the rotation sensor, the cover member may be grounded via the metal collar.

In such a case, the static electricity generated by the rotating body can be released through the metal collar. Therefore, the angle detector can be prevented from being influenced by the static electricity.

In addition, in the rotation sensor, the metal collar may have a flange portion at the top thereof, the flange portion being in contact with a top surface of the tab portion of the lower casing member.

In such a case, the metal collar can be easily attached to the lower casing member and be reliably brought into contact with the cover member.

In addition, in the rotation sensor, the cover member may have an engaging piece at the periphery thereof, the engaging piece elastically engaging with the lower casing member.

In such a case, the cover member can be easily fixed to the lower casing member.

In addition, in the rotation sensor, the angle detector may be connected to a connector that projects outward from the lower casing member, and the cover member may have an elastic engaging portion for press-fitting the connector.

In such a case, the connector can be rigidly fixed by the cover member made of metal.

In addition, in the rotation sensor, the cover member may have a step portion such that a portion of the cover is positioned in the vicinity of the top surface of the rotating body.

In such a case, the static electricity generated by the rotating body can be reliably guided to the cover, so that the angle detector can be reliably prevented from being influenced by the angle detector.

### BRIEF DESCRIPTION OF THE DRAWINGS

Fig. 1 is a perspective view of a rotation sensor according to an embodiment of the present invention;
Fig. 2 is an exploded perspective view of the rotation sensor;
Fig. 3 is a side view of a metal collar; and
Fig. 4 is an exploded side view of the rotation sensor.

### DESCRIPTION OF THE PREFERRED EMBODIMENT

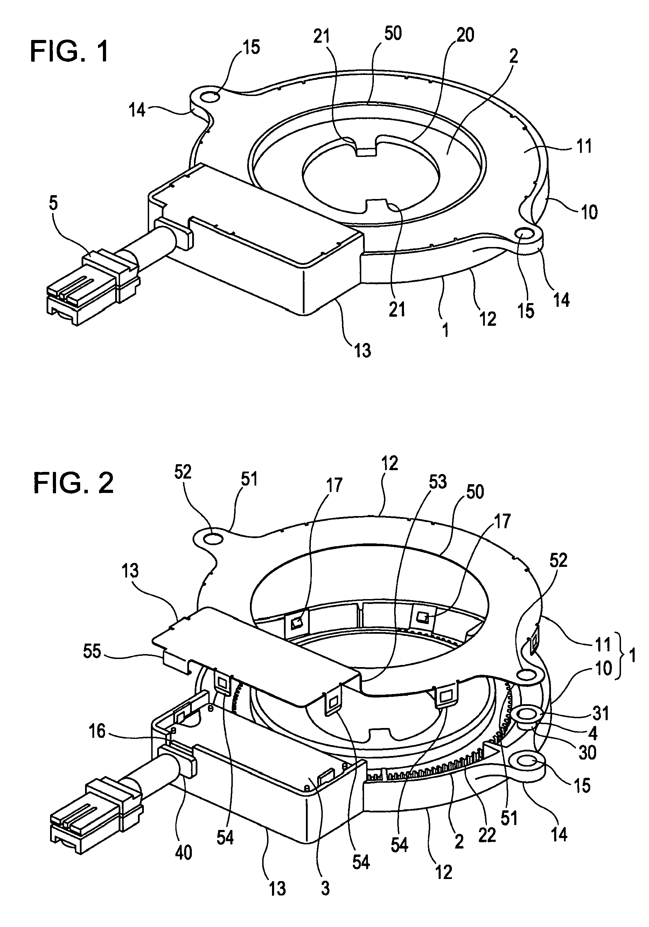

An embodiment of the present invention will be described in detail below with reference to the accompanying drawings. Fig. 1 is a perspective view of a rotation sensor according to the embodiment. As shown in Fig. 1, the rotation sensor according to the present embodiment includes a casing 1, a rotating body 2 that is rotatably held in the casing 1, and a connector 5 that projects from the casing 1 to provide a sensor output. The casing 1 also accommodates an angle detector 3 that detects the rotation of the rotating body 2.

The casing 1 includes a lower casing member 10 that defines side and bottom surfaces and a cover member 11 that defines a top surface. The casing 1 has a substantially disc-shaped rotating-body-accommodating section 12 for accommodating the rotating body 2 and a substantially box-shaped detector-accommodating section 13 for accommodating the angle detector 3. The lower casing member 10 and the cover member 11 are shaped so as to form the rotating-body-accommodating section 12 and the detector-accommodating section 13.

Two tab portions 14 are provided at the periphery of the casing 1 so as to project therefrom in the radial direction of the rotating-body-accommodating section 12. Each of the tab portions 14 has a through hole 15 formed therein. The through holes 15 in the tab portions 14 are used to fix the rotation sensor to a vehicle or the like at a predetermined position by means of screws.

The cover member 11 of the casing 1 has an opening 50 at a central area thereof, so that a central portion of the rotating body 2 is exposed through the opening 50. The rotating body 2 also has an opening 20 at a central area thereof. Two latch portions 21 are provided at the inner periphery of the opening 20 so as to project inward. The rotation sensor is attached such that a rotating shaft (not shown) whose rotation angle is to be detected extends through the opening 20 in the rotating body 2. The latch portions 21 of the rotating body 2 engage with the rotating shaft, so that the rotation sensor is fixed while allowing the rotating body 2 to rotate together with the rotating shaft.

Fig. 2 shows an exploded perspective view of the rotation sensor in the state in which the cover member 11 is detached. As shown in Fig. 2, the lower casing member 10 has an open top, and the cover member 11 is attached so as to cover the open top of the lower casing 10. As described above, the rotating body 2 and the angle detector 3 are disposed in the lower casing member 10.

The rotating body 2 has a substantially circular outer periphery, and a gear portion 22 is formed on the outer peripheral surface of the rotating body 2. The gear portion 22 is linked with the angle detector 3 via a gear engagement portion (not shown) disposed in the angle detector 3. In this example, a rotating drum (not shown) that can be rotated by the rotation of the rotating body 2 is provided, the rotating drum having magnetic codes formed of magnetic poles arranged along the outer periphery thereof. In addition, a magnetic sensor (not shown) is arranged so as to face the outer peripheral surface of the rotating drum with a predetermined gap therebetween. When the rotating drum is rotated by the rotation of the rotating body 2, the magnetic sensor detects a change in the magnetic force generated by the magnetic poles, whereby the rotation angle of the rotating body 2 can be detected. However, the method of angle detection is not limited to this, and other kinds of methods can also be used.

In addition to the rotating body 2, the angle detector 3 is also accommodated in the lower casing member 10. A portion of the lower casing member 10 that corresponds to the detector-accommodating section 13 has an opening 16 in a rear side thereof. The connector 5 projects through this opening 16. The opening 16 extends to the top edge of the lower casing member 10 and engages with a connector engaging portion 55 of the cover member 11 as described below.

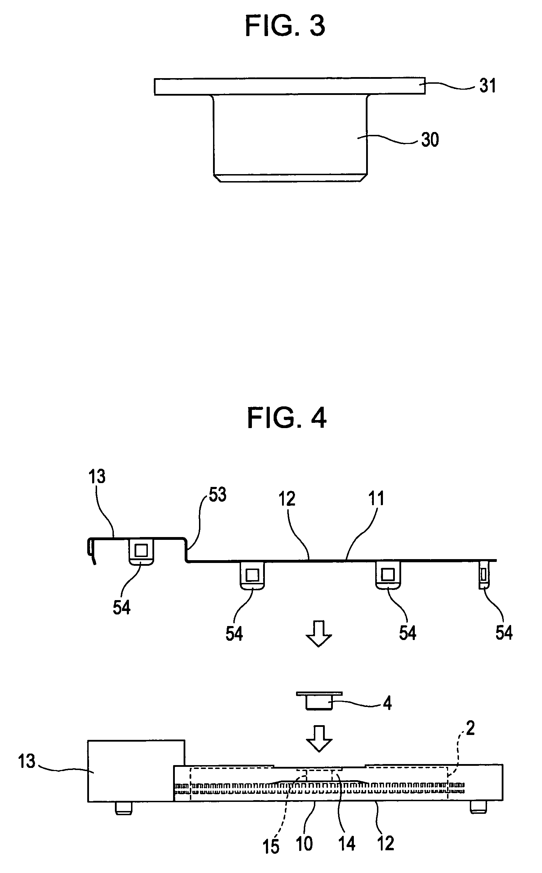

A metal collar 4 is inserted into each of the through holes 15 formed in the tab portions 14 of the lower casing member 10. The metal collar 4 is entirely made of metal. Fig. 3 shows a side view of the metal collar 4. As shown in Fig. 3, the metal collar 4 includes a cylindrical inserting portion 30 having a diameter that is substantially equal to that of the inner periphery of each through hole 15 and a flange portion 31 formed along the entire periphery of the inserting portion 30 at the top end thereof. The flange portion 31 extends outward along a plane perpendicular to the peripheral surface of the inserting portion 30. Referring to Fig. 2, the inserting portion 30 is inserted into the through hole 15 in the lower casing member 10 such that the bottom surface of the flange portion 31 comes into contact with the top surface of the tab portion 14 of the lower casing member 10.

The cover member 11 of the casing 1 is formed of a metal plate. A portion of the cover member 11 that corresponds to the rotating-body-accommodating section 12 has the opening 50 at a central area thereof, so that the central portion of the rotating body 2 is exposed through the opening 50. A peripheral portion of the cover member 11 covers the lower casing member 10 from above. The cover member 11 has cover-member tab portions 51 for covering the tab portions 14 of the lower casing member 10 from above while the metal collar 4 is attached to each of the tab portions 14. Each of the cover-member tab portions 51 has a cover-member through hole 52 formed therein, the cover-member through hole 52 communicating with the corresponding through hole 15 in the lower casing member 10 via the metal collar 4. Accordingly, screws can be inserted into the tab portions 14 to fix the rotation sensor with the screws. Although not shown in Fig. 2, the tab portion 14 of the lower casing member 10 on the left in Fig. 2 also has the metal collar 4 inserted therethrough, and is covered by the corresponding cover-member tab portion 51 of the cover member 11.

The cover member 11 has a plurality of engaging pieces 54 along the periphery thereof. The engaging pieces 54 have elasticity with respect to the top surface of the cover member 11. The lower casing member 10 has engaging portions 17 along the inner periphery thereof at positions corresponding to the engaging pieces 54. The lower casing member 10 and the cover member 11 can be fixed to each other by engaging the engaging pieces 54 of the cover member 11 with the corresponding engaging portions 17 of the lower casing member 10. The engaging portions 17 may also be formed along the outer periphery of the lower casing member 10.

The tab portions 14 of the lower casing member 10 to which the metal collars 4 are attached are covered by the cover-member tab portions 51 of the cover member 11. Thus, the cover member 11 covers the top of the lower casing member 10 over a region including the top surfaces of the metal collars 4. Therefore, when the rotation sensor is fixed by inserting screws through the tab portions 14, the lower casing member 10 and the cover member 11 can be rigidly fixed to each other. In addition, due to the above-described structure, the metal collars 4 can also be rigidly fixed to the lower casing member 10. Since it is only necessary to form the metal collars 4 such that the metal collars 4 can be inserted into the through holes 15 formed in the lower casing member 10, the structure of the metal collars 4 can be simplified and the metal collars 4 can be easily attached. In addition, the cover member 11 is grounded through the metal collars 4 and the screws fitted to the through holes 15. Therefore, the static electricity generated in the rotation sensor, in particular, the static electricity generated due to the rotation of the rotating body 2, can be reliably released. As a result, noise or the like can be prevented in the process of detecting the rotation.

The cover member 11 has the connector engaging portion 55 on the rear edge thereof at a position corresponding to the opening 16 in the lower casing member 10. The connector engaging portion 55 elastically engages with a base portion 40 of the connector 5 that is inserted through an upper portion of the opening 16. Accordingly, the connector 5 can be rigidly press-fitted to the casing 1.

The cover member 11 has a step portion 53 at a position between the rotating-body-accommodating section 12 and the detector-accommodating section 13. Fig. 4 shows an exploded side view of the rotation sensor. As shown in Fig. 4, the step portion 53 of the cover member 11 is formed such that a portion of the cover member 11 that corresponds to the rotating-body-accommodating section 12 is positioned below a portion of the cover member 11 that corresponds to the detector-accommodating section 13.

The lower casing member 10 is also formed such that a top surface of a portion corresponding to the detector-accommodating section 13 is positioned above a top surface of a portion corresponding to the rotating-body-accommodating section 12. The rotating body 2 is disposed in the lower casing member 10 as described above, and the cover member 11 is arranged such that the portion of the cover member 11 that corresponds to the rotating-body-accommodating section 12 is positioned in the vicinity of the top surface of the rotating body 2. Accordingly, the static electricity generated due to the rotation of the rotating body 2 can be reliably guided to the cover member 11. Since the cover member 11 is electrically grounded via the metal collars 4 and the screws attached to the through holes 15, the static electricity generated by the rotating body 2 can be prevented from influencing the angle detector 3.

Although an embodiment of the present invention is described above, the present invention is not limited to the above-described embodiment, and various modifications are possible within the technical scope of the present invention. For example, the arrangement and number of the tab portions 14 of the casing 1 and the metal collars 4 are not limited to those described in the embodiment.

## Claims

1. A rotation sensor comprising a rotating body (2) that rotates together with a rotating shaft, an angle detector (3) that detects a rotation angle of the rotating body (2), and a casing (1) that accommodates the rotating body (2) and the angle detector (3),
wherein the casing (1) includes a lower casing member (10) having an open top and a tab portion (14) provided at the periphery of the lower casing member (10) and a cover member (11) that covers the top of the lower casing member (10),
wherein the tab portion (14) of the lower casing member (10) has a through hole (15) through which a metal collar (4) extends, the metal collar (4) having a shape that substantially matches the inner periphery of the through hole (15), and
wherein the cover member (11) is made of metal and covers the top of the lower casing member (10) over a region including a top surface of the metal collar (4) that extends through the through hole (15).

2. The rotation sensor according to Claim 1, wherein the cover member (11) is grounded via the metal collar (4).

3. The rotation sensor according to Claim 1 or 2, wherein the metal collar (4) has a flange portion at the top thereof, the flange portion being in contact with a top surface of the tab portion (14) of the lower casing member (10).

4. The rotation sensor according to one of Claims 1 to 3, wherein the cover member (11) has an engaging piece (54) at the periphery thereof, the engaging piece (54) elastically engaging with the lower casing member (10).

5. The rotation sensor according to one of Claims 1 to 4, wherein the angle detector (3) is connected to a connector (5) that projects outward from the lower casing member (10), and wherein the cover member (11) has an elastic engaging portion (55) for press-fitting the connector (5).

6. The rotation sensor according to one of Claims 1 to 5, wherein the cover member (11) has a step portion (53) such that a portion of the cover is positioned in the vicinity of the top surface of the rotating body (2).
